# EUROPÄISCHE PATENTANMELDUNG

(11) **EP 2 719 533 A1**
(43) Veröffentlichungstag der Anmeldung: **16.04.2014**
(21) Anmeldenummer: 12007107.1
(22) Anmeldetag: 12.10.2012
(51) Int. Cl.: B32B 27/08, B32B 27/30, E06B 3/66

(54) **Isolierverglasungseinheit**

(71) Anmelder: Amcor Flexibles Kreuzlingen Ltd., 8280 Kreuzlingen (CH)
(72) Erfinder: Lohwasser, Wolfgang, 78262 Gallingen (DE)
(74) Vertreter: Gernet, Samuel Andreas

(57) **Zusammenfassung**

Isolierverglasungseinheit enthaltend wenigstens einen Abstandhalter (15) für die Beabstandung von in einem Rahmen (12) aufgenommenen Glasscheiben (10), wobei der Abstandhalter (15) zumindest auf der gegen den Rahmen (12) gerichteten Seite mit einer Barrierefolie (20) beaufschlagt ist. Die Barrierefolie (20) ist eine Verbundfolie, die auf der gegen den Abstandhalter (15) gerichteten Seite eine Kleber- oder Siegelschicht als Innenschicht (30) und auf der gegen den Rahmen (12) gerichteten Seite eine Sperrschicht (35) enthaltend orientiertes EVOH und eine aussen liegende, gegen den Rahmen gerichtete, dünne Haftschicht (40) aus Metall oder Metalloxyd aufweist.

## Beschreibung

Die Erfindung betrifft eine Isolierverglasungseinheit gemäss dem Oberbegriff von Anspruch 1, sowie ein Verfahren zu deren Herstellung.

Isolierverglasungseinheiten sind insbesondere als mehrfach verglaste Fenster seit langem bekannt. Diese Art der Verglasung dient insbesondere der guten Wärme- und Schallisolation. Solche Fenster bestehen aus mindestens zwei parallel angeordneten Glasscheiben, die von Abstandhaltern beabstandet werden. Dabei entsteht zwischen den Glasscheiben ein Zwischenraum, der mit Luft oder Gas als Isolationsmedium befüllt wird.

Die Abstandhalter werden üblicherweise entlang dem Fensterrahmen angeordnet und werden zweckmässigerweise mit einem thermoplastischen Dichtstoff durch Verpressen fest mit den Glasscheiben verbunden.

Die Abstandhalter weisen üblicherweise einen Hohlraum zur Aufnahme eines Trocknungsmittels auf. Dieses Trocknungsmittel dient zur Aufnahme der im Scheibenzwischenraum befindlichen Restfeuchte. Dazu weisen die Abstandhalter gegen den Scheibenzwischenraum gewisse Öffnungen oder Schlitze auf, so dass die Feuchte zu den mit Trocknungsmittel gefüllten Hohlräumen der Abstandshalter gelangen kann.

Die Abstandhalter sind zweckmässigerweise so ausgelegt, dass sie das Eindringen von Feuchtigkeit vom Rahmen her in den Scheibenzwischenraum unterbinden. Dazu werden verschiedene, zwischen Rahmen und Abstandhalter befindliche Dichtmittel verwendet.

Um eine ausreichende Barrierewirkung zu gewährleisten, lehrt beispielsweise die EP 2 218 862 A2 die Aussenseiten der Abstandhalter zumindest teilweise mit einer Barrierefolie zu beaufschlagen. Dies betrifft insbesondere die gegen den Rahmen gerichteten Unterseiten und ein Teil der Seitenflächen der Abstandhalter.

Wenn die Barrierefolie während des Zusammenbaus der Isolierverglasungseinheit auf die Abstandhalterprofile aufgeschweisst oder aufgeklebt wird, so wird die Barrierefolie hohen mechanischen Belastungen ausgesetzt. Durch die Längendehnung der Barrierefolien wird dabei ihre Barrierewirkung oft stark vermindert. Selbst wenn in der Isolierglasfertigung die flexiblen Abstandhalter mittels Robotern an die Scheiben aufgebracht werden, werden die Abstandprofile und damit auch die Barrierefolien hohen Zugspannungen ausgesetzt.

Die aus dem Stand der Technik bekannten Dichtstoffe haben oft nur eine geringe Haftung gegenüber Kunststoffoberflächen von Verbundfolien. Insbesondere haften die üblichen in Verbundglasscheiben applizierten Primärdichtstoffe (Butyl) und die Sekundärdichtstoffe (Silikone, Polysulfide, Polyurethane) auf den üblicherweise für diese Anwendung applizierten Kunststoffverbundfolien ohne den Einsatz von Primern nur mässig. Dadurch treten insbesondere bei grösseren Temperaturschwankungen leicht Leckstellen zwischen einem solchen Folienverbund, beispielsweise einer Barrierefolie, und den Glasscheiben auf. Solche Leckstellen führen oft zu vorzeitigem Verlust von Inertgas im Glasscheiben-Zwischenraum und damit zu einer vorzeitig verminderten Isolationswirkung der Isolierverglasungseinheit.

Aufgabe vorliegender Erfindung ist die Verminderung der genannten Nachteile bestehender Isolierverglasungseinheiten und die Bereitstellung einer Isolierverglasungseinheit mit einer Barrierefolie mit gegenüber dem Stand der Technik verbesserten Sperreigenschaften hinsichtlich Gas- und Feuchtigkeitsdurchtritt. Eine weitere Aufgabe besteht in der Bereitstellung einer Isolierverglasungseinheit enthaltend Barrierefolien mit gegenüber dem Stand der Technik niedrigeren Wärmeleitungseigenschaften.

Zur Lösung dieser Aufgaben führt eine Isolierverglasungseinheit mit den Merkmalen von Anspruch 1. Bevorzugte Ausführungsformen werden in den abhängigen Ansprüchen beschrieben.

Eine erfindungsgemässe Isolierverglasungseinheit enthält wenigstens einen Abstandhalter für die Beabstandung von in einem Rahmen aufgenommenen Glasscheiben, wobei der Abstandhalter zumindest auf der gegen den Rahmen gerichteten Seite mit einer Barrierefolie beaufschlagt ist. Dabei ist die Barrierefolie eine Verbundfolie, die auf der gegen den Abstandhalter gerichteten Seite eine Kleber- oder Siegelschicht als Innenschicht und auf der gegen den Rahmen gerichteten Seite eine Sperrschicht enthaltend orientiertes EVOH und eine aussen liegende, gegen den Rahmen gerichtete, dünne Haftschicht aus Metall oder Metalloxyd aufweist.

Wesentlich dabei ist, dass die EVOH-Schicht durch Recken als orientierte EVOH-Schicht vorliegt. Dabei steht EVOH für Ethylen-Vinylalkohol-Copolymer.

Die Abstandhalter bestehen bevorzugt aus flexiblem Material und werden bevorzugt aus einem Bandprofil abgeschnitten.

Bevorzugt werden auch die gegen die Glasscheiben gerichteten Seiten des Abstandhalters zumindest teilweise mit der Barrierefolie beaufschlagt.

Die Schichtdicke der Schicht aus orientiertem EVOH beträgt bevorzugt zwischen 8 und 30 µm und insbesondere zwischen 10 bis 15 µm.

Die Innenschicht der Barrierefolie enthält auf der gegen den Abstandhalter gerichteten Seite bevorzugt eine PE-Schicht. Die Innenschicht kann dabei aus einer reinen Polyethylen-Schicht bestehen, oder kann eine coextrudierte oPP Folie mit einer Siegelschicht sein, wobei die Siegelschicht für PE basierte Abstandhalter aus PE ist und die äussere Schicht bildet. Eine coextrudierte oPP Folie mit einer Siegelschicht aus PE wird im Weiteren als coextrudierte oPP-PE-Schicht bezeichnet. Dabei steht oPP für orientiertes Polypropylen.

Die dünne Haftschicht besteht bevorzugt aus SiOₓ oder AlO_{y}, wobei x grösser als 0.9 und kleiner als 2 ist, und y grösser als 0.8 und kleiner als 1.5 ist. Diese Haftschichten weisen bevorzugt eine Schichtdicke von wenigstens 10 nm auf, wobei die Schichtdicke bevorzugt weniger als 1 µm, insbesondere weniger als 0.2 µm und ganz bevorzugt weniger als 0.1 µm beträgt.

Für die dünnen Haftschichten werden Metalloxydschichten gegenüber dünnen Metallschichten bevorzugt, da sie eine bessere Korrosionsbeständigkeit und eine geringere Wärmeleitfähigkeit aufweisen.

Die dünnen Haftschichten werden bevorzugt durch einen Vakuumprozess, insbesondere durch Verdampfen, Sputtern oder durch einen Plasma CVD-Prozess abgeschieden. Dabei steht CVD für Chemical Vapour Deposition. Die Haftschichten können weiter bevorzugt auch durch einen reaktiven Gasphasenprozess, gegebenenfalls auch bei Atmosphärendruck, abgeschieden werden, insbesondere durch einen Plasma CVD-Prozess oder ALD (Atomic Layer Deposition).

Die in der erfindungsgemässen Isolierverglasungseinheit eingesetzte Barrierefolie gilt als metallfrei, auch wenn die dünne Haftschicht aus Metall oder Metalloxyd besteht, denn die erwähnten Metallschichten sind derart dünn, dass sie die Wärmeleitung der Barriereschicht nicht oder nur zu einem unbedeutenden Teil beeinflussen.

Die in der erfindungsgemässen Isolierverglasungseinheit eingesetzten Barriereverbundfolien weisen auch nach der Applikation auf die Abstandhalter mittels einem Roboter oder Automaten noch exzellente Sperreigenschaften hinsichtlich Gasdiffusion und niedriger Wärmeleitung auf. Zudem weisen diese auf die Abstandhalter applizierten Barrierefolien auch eine exzellente Haftung auf den Abstandhalterprofilen sowie an den Glasscheiben auf.

Die Barrierefolien werden vorzugsweise auf ein von einer Rolle abgewickeltes Abstandhalterprofil appliziert.

Die erfindungsgemässe Isolierverglasungseinheit weist zumindest zwei in einem Rahmen aufgenommene Glasscheiben auf, welche mittels eines Abstandhalters auseinander gehalten werden. Der Abstandhalter weist am unteren Rand vorteilhaft eine stufenförmige Ausnehmung zur Aufnahme eines Primärdichtmittels auf. Das Primärdichtmittel besteht bevorzugt aus Butyl. Die Barrierefolie deckt bevorzugt den gegen den Rahmen gerichteten Teil des Abstandhalters sowie einen Teil der gegen die Scheiben gerichteten Seitenflächen des Abstandhalters ab. Der zwischen Rahmen und mit der Barrierefolie beaufschlagten Fläche des Abstandhalterelements bzw. der frei liegenden Oberfläche der Primärdichtmittel befindliche Raum ist mit einem Sekundärdichtmittel gefüllt. Die Sekundärdichtmittel bestehen bevorzugt aus Silikon, Polysulfiden oder Polyurethan. Der von den Abstandhaltern eingeschlossene, zwischen den Scheiben liegende Raum ist mit einem Inertgas, bevorzugt mit Argon, gefüllt. An den gegen die Scheiben gerichteten Seitenflächen des Abstandhalters kann weiterhin ein Adhesivklebeband angebracht sein.

Eine bevorzugte Ausbildung der Sperrschicht weist eine PET-Schicht und eine Schicht aus orientiertem EVOH auf, wobei die dünne Haftschicht aus Metall oder Metalloxyd auf die PET-Schicht aufgebracht wird. Die PET-Schicht weist hierbei bevorzugt eine Dicke von 12 bis 50 µm auf.

In einer weiteren bevorzugten Ausführungsform weist die Sperrschicht der Barrierefolie zwischen der Schicht aus orientiertem EVOH und der PET-Schicht eine Dünnschicht aus Metalloxyd auf. Diese Dünnschicht besteht bevorzugt aus SiOₓ oder AlO_{y}, wobei x grösser als 0.9 und kleiner als 2 ist, und y grösser als 0.8 und kleiner als 1.5. Die Schichtdicke der Dünnschicht beträgt bevorzugt wenigstens 10 nm, jedoch weniger als 1 µm. Ganz bevorzugt beträgt die Schichtdicke der Dünnschicht weniger als 0.2 µm und insbesondere weniger als 0.1 µm.

Bevorzugt geschieht die Beaufschlagung des Abstandhalters mit der Barrierefolie als Verschweissung durch Versiegelung der Innenschicht der Barrierefolie mit dem Abstandhalter. Zum Verschweissen der Barrierefolie mit dem Abstandhalter besteht zumindest eine äussere Schicht des Abstandhalters und die Innenschicht der Barrierefolie bevorzugt aus demselben Material. Als Siegelschicht dient dazu bevorzugt eine PE-Schicht. Die Barrierefolie kann jedoch auch auf den Abstandhalter aufgeklebt werden.

Der zwischen den Glasscheiben und dem Abstandhalter liegende Raum wird bevorzugt mit einem Inertgas, insbesondere mit Argon, befüllt.

Zur Erfindung gehört auch ein Verfahren zur Herstellung einer Barrierefolie für eine erfindungsgemässe Isolierverglasungseinheit, bei dem eine Verbundfolie als Barrierefolie hergestellt wird, welche auf der einen Seite eine äussere Kleber- oder Schweissschicht als Innenschicht und eine darauf laminierte Sperrschicht enthaltend orientiertes EVOH und auf der anderen äusseren Seite der Verbundfolie eine dünne Haftschicht aus Metall oder Metalloxyd aufweist.

Das Verfahren betrifft die Herstellung einer Dampf- und Gassperre für eine erfindungsgemässe Isolierverglasungseinheit enthaltend wenigstens einen Abstandhalter für die Beabstandung von in einem Rahmen aufgenommenen Glasscheiben, wobei eine Barrierefolie als Dampf- und Gassperrschicht zumindest auf die gegen den Rahmen gerichtete Seite des Abstandhalters aufgebracht und mit diesem trennfest verbunden wird. Dabei wird zuerst eine Verbundfolie als Barrierefolie hergestellt, welche auf der gegen den Abstandhalter gerichteten Seite eine Kleber- oder Schweissschicht als Innenschicht und auf der gegen den Rahmen gerichteten Aussenseite eine Sperrschicht enthaltend orientiertes EVOH und eine aussen liegende, gegen den Rahmen gerichtete, dünne Haftschicht aus Metall oder Metalloxyd aufweist. Danach wird der Abstandhalter mit der Barriereschicht verklebt oder verschweisst.

### Beispiele:

Ein Mass für die Güte einer Dampf- und Gas-Barriere ist die Sauerstoffdurchlässigkeit. Hierbei sei klargestellt, dass die entsprechende Argondurchlässigkeit ungefähr einem Drittel der Sauerstoffdurchlässigkeit entspricht.

Im Rahmen der Erfindung wurden verschiedene Folienverbunde hergestellt und deren Sauerstoffdurchlässigkeit (Oxygen Transmission Rate in [cm³/m²/24 h/bar]) gemessen. In Tabelle I sind die so ermittelten Werte in der Spalte OXTR Verbund wiedergegeben.

Die verschiedenen Folienverbunde wurden anschliessend mittels einer auf eine Temperatur von 120 °C aufgeheizten Anpressrolle auf ein flexibles Kunststoffprofil aus einem thermoplastischen Elastomer mit einer Profilbreite von 19 mm aufgeschweisst und mit mässigem Zug von 30 N auf eine Hülse aufgewickelt. Die Hülse hatte einen Durchmesser von 300 mm. Danach wurde die Sauerstoffdurchlässigkeit (Oxygen Transmission Rate in [cm³/m²/24 h/bar]) des Profils (Abstandhalterprofil) inklusive des aufgeschweissten Folienverbundes gemessen. Die ermittelten Werte sind in Tabelle I in der Spalte OXTR Profil wiedergegeben.

Die Beispiele zeigen, dass Sperrschichten aus orientiertem EVOH mit einer SiOₓ-Beschichtung (0.9 < x < 2) besonders gute Barriereeigenschaften hinsichtlich Sauerstoffdurchlässigkeit aufweisen. Zudem weist SiOₓ eine niedrige Wärmeleitfähigkeit und eine hohe chemische Beständigkeit auf.

Bevorzugt werden mit einer Barrierefolie beaufschlagte Abstandhalterprofile mit einem OXTR-Wert von 0.5 cm³/m²/24 h/bar oder weniger.

**Tabelle I:**

| Folienverbund | OXTR Verbund [cm³/m²/24 h/bar] | OXTR Profil [cm³/m²/24 h/bar] |
|---|---|---|
| SiOₓ / PET (23 µm) / adhesive / SiOₓ / PET (12 µm) / adhesive / PE (70 µm) | 0.2 | 8-15 |
| SiOₓ / PET (23 µm) / SiOₓ / EVOH (nicht-orientiert) / oPP (0.5 µm) / PE | 0.1 | 2 |
| SiOₓ / PET (23 µm) / EVOH (nicht-orientiert, 20 µm) / oPP (0.5 µm) / PE | 1.5 | 1.5 |
| SiOₓ / PET (23 µm) / EVOH (orientiert, 12 µm) / oPP (0.5 µm) / PE | 0.5 | 0.5 |
| SiOₓ / PET (23 µm) / SiOₓ / EVOH (orientiert, 12 µm) / oPP (0.5 µm) / PE | < 0.1 | < 0.1 |

Weitere Vorteile, Merkmale und Einzelheiten der Erfindung ergeben sich aus der nachfolgenden Beschreibung bevorzugter Ausführungsbeispiele sowie anhand der Zeichnungen.
- Figur 1: zeigt schematisch einen Querschnitt durch einen Teil einer Isolierverglasungseinheit;
- Figur 2: zeigt einen Querschnitt einer ersten Barrierefolie;
- Figur 3: zeigt einen Querschnitt einer zweiten Barrierefolie;
- Figur 4: zeigt einen Querschnitt einer dritten Barrierefolie;
- Figur 5: zeigt einen Querschnitt einer fünften Barrierefolie.

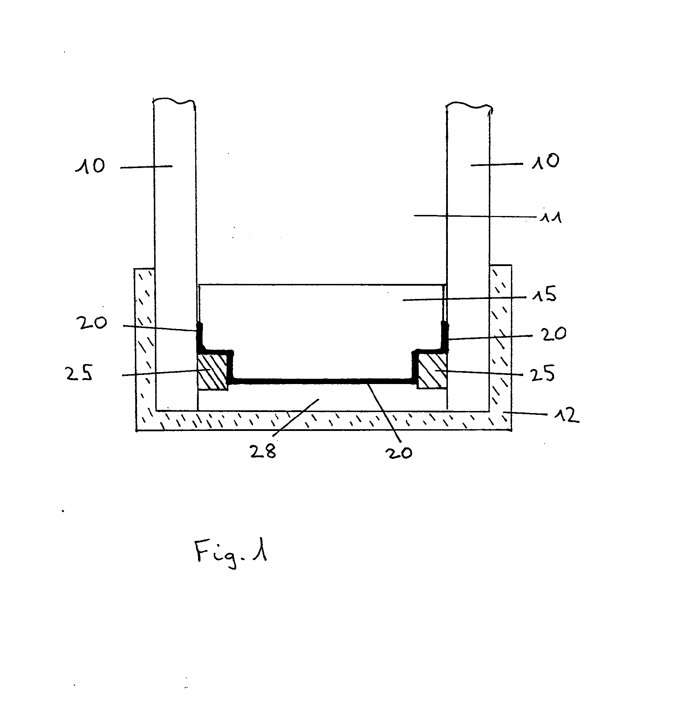

Figur 1 zeigt schematisch einen Querschnitt durch einen unteren Teil einer Isolierverglasungseinheit, bei welcher zwei Scheiben 10 in einem Rahmen 12 aufgenommen sind, wobei die Scheiben mittels eines Abstandhalters 15 auseinander gehalten werden. Das Abstandhalterelement 15 hat am unteren Rand eine stufenförmige Ausnehmung zur Aufnahme eines Primärdichtmittels 25. Eine Barrierefolie 20 deckt den unteren, gegen den Rahmen 12 gerichteten Teil des Abstandhalterelements 15 sowie einen Teil der gegen die Scheiben 10 gerichteten Seitenflächen des Abstandhalterelements 15 ab. Der zwischen Rahmen 12 und der Unterseite des mit der Barrierefolie 20 beaufschlagten Abstandhalterelements 15 und der Unterseite der Primärdichtmittel 25 befindliche Raum ist mit einem Sekundärdichtmittel 28 gefüllt. Der zwischen den Scheiben 10 oberhalb des Abstandhalters 15 befindliche Raum 11 ist mit einem Inertgas, bevorzugt mit Argon, gefüllt. An den gegen die Scheiben 10 gerichteten Seitenflächen des Abstandhalters 15 kann ein Adhesivklebeband angebracht sein (nicht gezeigt).

Das Primärdichtmittel besteht bevorzugt aus Butyl. Die Sekundärdichtmittel bestehen bevorzugt aus Silikon, Polysulfide oder Polyurethan.

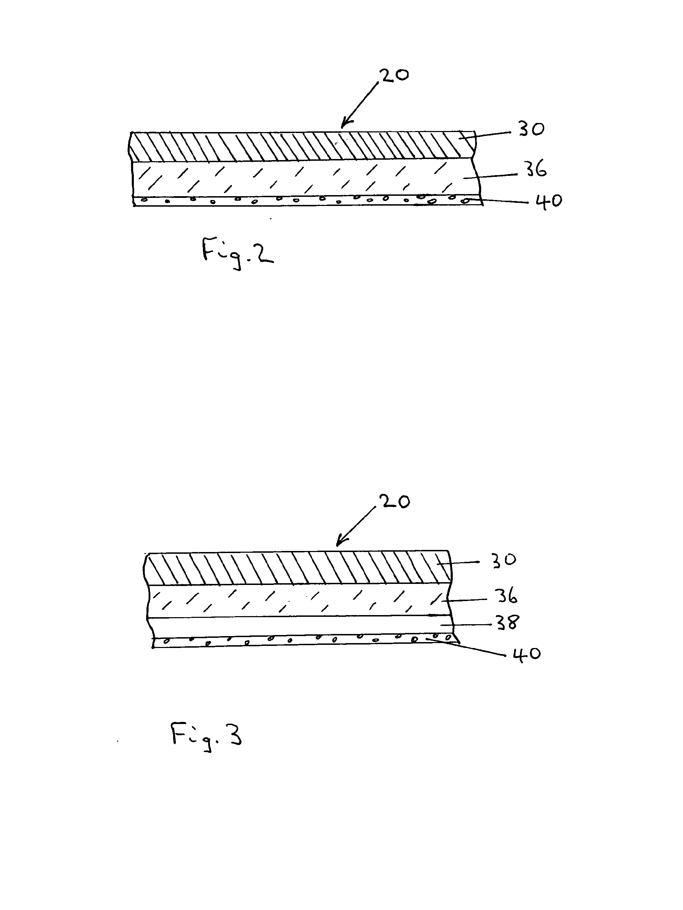

Die in Figur 2 gezeigte Barriere-Verbundfolie 20 weist eine Innenschicht 30 und eine darauf laminierte Schicht 36 aus orientiertem EVOH auf. Dabei steht EVOH für Ethylen-Vinylalkohol-Copolymer. Erfindungswesentlich ist dabei, dass die EVOH Schicht durch ein Reckverfahren orientiert ist. Die EVOH Schicht weist zudem eine dünne Haftschicht 40 auf, wobei die Haftschicht bevorzugt eine Dünnschicht aus SiOₓ ist. Die in Figur 2 im Querschnitt dargestellte Barrierefolie 20 weist als Sperrschicht 35 nur eine einzige Schicht, nämlich die orientierte EVOH Schicht 36 auf. Allerdings übernimmt die Haftschicht 40 bei Schichtdicken von mehr als 10 nm auch teilweise die Funktion einer weiteren Barriereschicht. Die Barrierefolie 20 kommt im montierten Zustand mit der Innenschicht 30 an den Abstandhalter 15 zu liegen, wobei der an der Unterseite des Abstandhalters zwischen den Primärdichtmittel 25 liegende Bereich der Haftschicht 40 im montierten Zustand der Isolierverglasungseinheit in Kontakt mit dem Sekundärdichtmittel 28 steht. Die Innenschicht 30 ist bevorzugt eine Polyethylen-Folie oder eine coextrudierte oPP Folie mit einer Siegelschicht, wobei die Siegelschicht für PE basierte Abstandhalter aus PE ist und die äussere Schicht bildet, d.h. die gegen den Abstandhalter gerichtete Schicht.

Der in Figur 3 dargestellte Querschnitt einer weiteren bevorzugten Barrierefolie 20 zeigt wiederum eine Innenschicht und eine darauf laminierte Schicht aus orientiertem EVOH im Sinne von Figur 2. Auf der Schicht aus orientiertem EVOH befindet sich jedoch noch eine weitere Schicht 28 aus PET. Die EVOH und PET Schichten bilden zusammen die Sperrschicht 35. Auf der PET-Schicht 38 ist zudem eine dünne, bevorzugt aus SiOₓ oder AlO_{y} bestehende Haftschicht 40 abgeschieden.

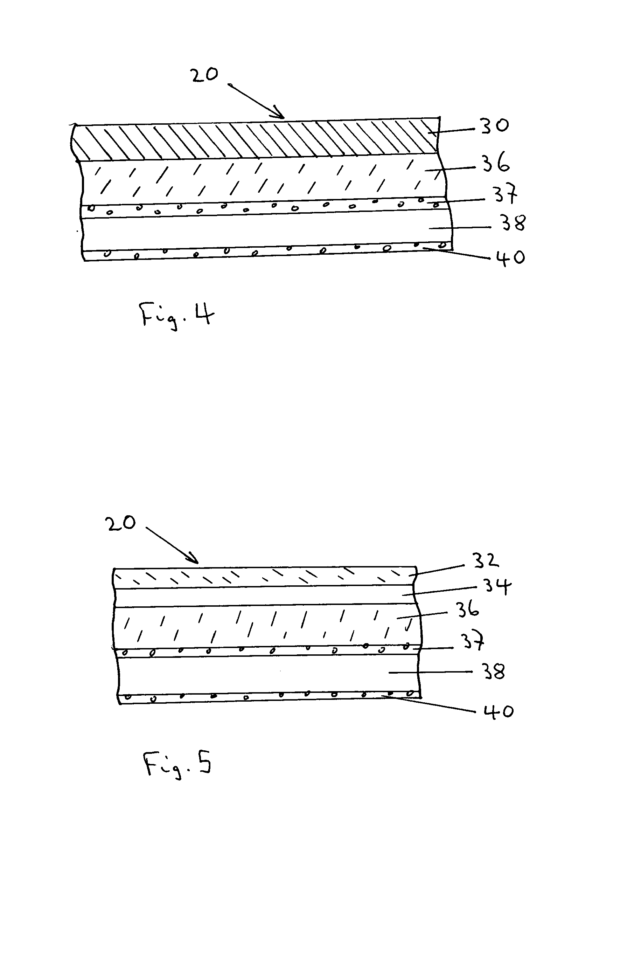

Figur 4 zeigt einen schematisch dargestellten Querschnitt durch eine weitere bevorzugte Barrierefolie 20. Der Schichtaufbau entspricht bis auf die Zwischenschicht 37 demjenigen der Figur 3. Die zwischen der Schicht 36 aus orientiertem EVOH und der PET-Schicht 38 angeordnete Dünnschicht 37 ist bevorzugt eine in einem Vakuum abgeschiedene SiOₓ oder AlO_{y} -Schicht. Die Sperrschicht 35 enthält somit die Schicht 36 aus orientiertem EVOH, die Dünnschicht 37 und die PET-Schicht 38. Auf der PET-Schicht befindet sich wiederum die dünne Haftschicht 40 aus Metall oder Metalloxyd. Im eingebauten Zustand befindet sich die Innenschicht 30 wiederum an der unteren und seitlichen Aussenseite des Abstandelements 15.

Figur 5 zeigt einen schematischen Querschnitt einer besonders bevorzugten Ausführungsform einer Barrierefolie 20. Der Schichtaufbau entspricht demjenigen wie in Figur 4 dargestellt, jedoch besteht die Innenschicht 30 aus einer coextrudierten oPP-PE-Schicht, wobei die auf der oPP Schicht 34 liegende PE-Schicht 32 im eingebauten Zustand gegen das Abstandelement zu liegen kommt. Bevorzugt dient die PE-Schicht 32 als Siegelschicht zum Verschweissen der Barrierefolie 20 mit dem Abstandelement 15.

## Patentansprüche

1. Isolierverglasungseinheit enthaltend wenigstens einen Abstandhalter (15) für die Beabstandung von in einem Rahmen (12) aufgenommenen Glasscheiben (10), wobei der Abstandhalter (15) zumindest auf der gegen den Rahmen (12) gerichteten Seite mit einer Barrierefolie (20) beaufschlagt ist,
**dadurch gekennzeichnet, dass**
die Barrierefolie (20) eine Verbundfolie ist, die auf der gegen den Abstandhalter (15) gerichteten Seite eine Kleber- oder Siegelschicht (32, 34) als Innenschicht (30) und auf der gegen den Rahmen (12) gerichteten Seite eine Sperrschicht (35) enthaltend orientiertes EVOH und eine aussen liegende, gegen den Rahmen (12) gerichtete, dünne Haftschicht (40) aus Metall oder Metalloxyd aufweist.

2. Isolierverglasungseinheit nach Anspruch 1, **dadurch gekennzeichnet, dass** zusätzlich auch die gegen die Glasscheiben (10) gerichteten Seiten des Abstandhalters (15) zumindest teilweise mit der Barrierefolie (20) beaufschlagt sind.

3. Isolierverglasungseinheit nach Anspruch 1, **dadurch gekennzeichnet, dass** die Schichtdicke der Schicht (36) aus orientiertem EVOH zwischen 8 und 30 µm, bevorzugt zwischen 10 bis 15 µm, beträgt.

4. Isolierverglasungseinheit nach Anspruch 1, **dadurch gekennzeichnet, dass** die Innenschicht (30) der Barrierefolie (20) auf der gegen den Abstandhalter (15) gerichteten Seite eine PE-Schicht (32) enthält.

5. Isolierverglasungseinheit nach Anspruch 4, **dadurch gekennzeichnet, dass** die Innenschicht (30) der Barrierefolie (20) aus PE oder aus einer coextrudierten oPP-PE-Schicht (32, 34) besteht.

6. Isolierverglasungseinheit nach Anspruch 1, **dadurch gekennzeichnet, dass** die dünne Haftschicht (40) aus SiOₓ oder AlO_{y} besteht, wobei x grösser als 0.9 und kleiner als 2 ist, und y grösser als 0.8 und kleiner als 1.5 ist.

7. Isolierverglasungseinheit nach Anspruch 6, **dadurch gekennzeichnet, dass** die dünne Haftschicht (40) eine Schichtdicke von wenigstens 0.2 nm, jedoch weniger als 1 µm, bevorzugt weniger als 0.2 µm und insbesondere weniger als 0.1 µm aufweist.

8. Isolierverglasungseinheit nach Anspruch 1, **dadurch gekennzeichnet, dass** die Sperrschicht (35) der Barrierefolie (20) eine PET-Schicht (38) und eine Schicht (36) aus orientiertem EVOH aufweist, wobei die dünne Haftschicht (40) aus Metall oder Metalloxyd auf der PET-Schicht (38) aufgebracht ist.

9. Isolierverglasungseinheit nach Anspruch 8, **dadurch gekennzeichnet, dass** die PET-Schicht (38) eine Dicke von 12-50 µm aufweist.

10. Isolierverglasungseinheit nach Anspruch 8, **dadurch gekennzeichnet, dass** die Sperrschicht (35) der Barrierefolie (20) zwischen der Schicht (36) aus orientiertem EVOH und der PET Schicht (38) eine weitere Dünnschicht (37) aus Metalloxyd aufweist.

11. Isolierverglasungseinheit nach Anspruch 10, **dadurch gekennzeichnet, dass** die weitere Dünnschicht (37) aus SiOₓ oder AlO_{y} besteht, wobei x grösser als 0.9 und kleiner als 2 ist, und y grösser als 0.8 und kleiner als 1.5 ist.

12. Isolierverglasungseinheit nach Anspruch 11, **dadurch gekennzeichnet, dass** die weitere Dünnschicht (37) eine Schichtdicke von wenigstens 10 nm, jedoch weniger als 1 µm, bevorzugt weniger als 0.2 µm und insbesondere weniger als 0.1 µm aufweist.

13. Isolierverglasungseinheit nach Anspruch 1, **dadurch gekennzeichnet, dass** die Beaufschlagung des Abstandhalters (15) mit der Barrierefolie (20) eine Verschweissung durch Versiegelung der Innenschicht (30) der Barrierefolie (20) mit dem Abstandhalter (15) ist.

14. Isolierverglasungseinheit nach Anspruch 14, **dadurch gekennzeichnet, dass** zumindest eine äussere Schicht des Abstandhalters (15) und die Innenschicht (30) der Barrierefolie (20) im wesentlichen aus dem selben Polymer bestehen.

15. Isolierverglasungseinheit nach einem der Ansprüche 1 bis 14, **dadurch gekennzeichnet, dass** der zwischen den Glasscheiben (10) und dem Abstandhalter (15) liegende Raum (11) eine Gasfüllung aus Argon enthält.

16. Isolierverglasungseinheit nach Anspruch 1, **dadurch gekennzeichnet, dass** der Abstandhalter (15) eine Innenstruktur enthaltend ein Trocknungsmittel und eine die Innenstruktur umschliessende, silikonfreie Aussenhülle aufweist.

17. Verfahren zur Herstellung einer Barrierefolie für eine Isolierverglasungseinheit nach einem der Ansprüche 1 bis 16,
**dadurch gekennzeichnet, dass**
eine Verbundfolie als Barrierefolie (20) hergestellt wird, welche auf der einen Seite eine äussere Kleber- oder Schweissschicht als Innenschicht (30) und eine darauf laminierte Sperrschicht (35) enthaltend orientiertes EVOH und auf der anderen äusseren Seite der Verbundfolie eine dünne Haftschicht (40) aus Metall oder Metalloxyd aufweist.
